# EUROPEAN PATENT APPLICATION

(11) **EP 4 807 852 A1**
(43) Date of publication of application: **16.09.2026**
(21) Application number: 26162214.6
(22) Date of filing: 04.03.2026
(51) Int. Cl.: H01M 10/42, H01M 10/48, H01M 10/615

(54) **SYSTEM AND METHOD FOR THERMAL PROPAGATION EVALUATION**

(30) Priority: 12.03.2025 KR 20250031920
(71) Applicant: SAMSUNG SDI CO., LTD., Yongin-si, Gyeonggi-do 17084 (KR)
(72) Inventor: Lee, Chanho, Yongin-si, Gyeonggi-do 17084 (KR)
(74) Representative: Meissner Bolte Partnerschaft mbB

(57) **Abstract**

A system (1300) and method for thermal propagation evaluation as disclosed. The method for thermal propagation evaluation includes machining a hole (510) in a long side of a battery can (59), attaching a heater (520) through a region in which the hole (510) is formed, and sealing the region in which the hole (510) is formed.

## Description

### CROSS-REFERENCE TO RELATED APPLICATION

This present application claims priority to and the benefit of Korean Patent Application No. 10-2025-0031920, filed on March 12, 2025, in the Korean Intellectual Property Office, the entire invention of which is incorporated herein by reference.

### BACKGROUND

### 1. Field

The present invention relates to a system and method for thermal propagation evaluation.

### 2. Description of the Related Art

According to conventional battery thermal runaway simulation technology, an external physical impact test (e.g., a nail penetration test) and an external heater heating method have been proposed. The external physical impact test involves artificially causing an internal short circuit by penetrating the battery cell from the outside by using a metal nail, which inevitably results in physical damage. Furthermore, in the external heater heating method, it is difficult to completely block heat even when thermal insulation is applied to an adjacent cell rather than a target cell, making it difficult to accurately simulate a thermal runaway phenomenon.

A method has been proposed in which a heater is inserted into a cell to induce thermal runaway by heating. However, in the aforementioned method, a cell manufacturing process requires inserting the heater into the cell, followed by electrolyte injection and a formation process. Accordingly, there is a high risk of ignition during formation and difficulty in securing qualified cells.

### SUMMARY

The present invention provides a system and method for thermal propagation evaluation, which may induce thermal runaway without causing physical damage to a can and without additional heat transfer to adjacent cells.

However, aspects and features of the present invention are not limited to the above-described aspects and features, and other aspects and features not mentioned will be clearly understood by those skilled in the art from the following description.

A method for thermal propagation evaluation, according to the present invention, includes machining a hole in a long side of a battery can, attaching a heater through a region in which the hole is formed, and sealing the region in which the hole is formed.

The machining of the hole in the long side of the battery may include machining a hole having a preset shape in a long side of a prismatic battery for vehicles.

The attaching of the heater may include attaching a film-type heater to an outer surface of an electrode stack in a cell.

The sealing may include placing a cut portion, removed in the machining of the hole, in an original space where the cut portion was present before being removed, and performing sealing by using an adhesive or by a thermal treatment.

The sealing may include sealing the region in which the hole is formed by using a jig for safety evaluation.

The jig may include a protruding structure corresponding to a size and shape of the region in which the hole is formed.

A height of the protruding structure may be formed to be the same as or less than a height of the region in which the hole is formed.

At least one sensor of a temperature sensor or a pressure sensor may be disposed in the protruding structure.

A system for thermal propagation evaluation includes a memory configured to store a control program for simulating a thermal runaway phenomenon of a battery cell and a processor configured to execute the program. The processor is configured to transmit a control command to apply heat by using a heater attached to a hole to induce thermal runaway.

The processor may be configured to transmit a command to perform sealing on the region in which the hole is formed and performs the sealing by using a jig according to the command. The jig may include a protruding structure corresponding to a size and shape of the region in which the hole is formed, and a height of the protruding structure is designed to be the same as or less than a height of the region in which the hole is formed.

A system for thermal propagation evaluation includes a heater inserted into and attached inside a battery can through a hole region formed in the battery can, and a sealing component configured to perform sealing on the hole region.

The heater may be attached in a form of a film to a preset region of an outer surface region of an electrode stack in a cell through the hole region formed in a long side of the battery can.

The sealing component may include a protruding structure disposed on one surface of a jig for safety evaluation. The protruding structure may be formed to correspond to a size and shape of the hole region. A height of the protruding structure may be formed to be the same as or less than a height of the hole region.

According to embodiments of the present invention, in an evaluation system for determining whether or not thermal runaway of a specific cell in a prismatic cell module or pack causes thermal runaway of cells adjacent to the specific cell, thermal runaway may be artificially induced in the specific cell.

The aspects and features of the present invention are not limited to those described above, and other aspects and features not mentioned will be clearly understood by those skilled in the art from the description set forth below.

### BRIEF DESCRIPTION OF THE DRAWINGS

The following drawings illustrate embodiments of the present invention and further describe aspects and features of the present invention together with the detailed description. Thus, the present invention should not be construed as being limited to the drawings:
FIG. 1 schematically illustrates an electrode assembly of a secondary battery;
FIG. 2 schematically illustrates a configuration of a pouch-type secondary battery;
FIG. 3 schematically illustrates an external appearance configuration of a prismatic secondary battery;
FIG. 4 is a cross-sectional view of a cylindrical secondary battery;
FIG. 5 illustrates a system for thermal propagation evaluation according to embodiments of the present invention;
FIGS. 6A and 6B illustrate a jig structure of the thermal propagation evaluation system according to embodiments of the present invention;
FIG. 7 is a flowchart describing a method for thermal propagation evaluation according to embodiments of the present invention;
FIG. 8 is a block diagram illustrating a computer system for implementing the method according to embodiments of the present invention;
FIG. 9 schematically illustrates a secondary battery module in which secondary batteries manufactured according to examples of the present invention are arranged;
FIG. 10 schematically illustrates a secondary battery pack including the secondary battery module illustrated in FIG. 9; and
FIG. 11 is a conceptual view of a vehicle including the secondary battery pack illustrated in FIG. 10.

### DETAILED DESCRIPTION

Hereinafter, embodiments of the present invention will be described, in detail, with reference to the accompanying drawings. The terms or words used in the specification and claims are not to be interpreted based on their general or ordinary meaning but should be interpreted as having meanings and concepts that are consistent with the technical idea of the present invention on the basis of the principle that an inventor can be their own lexicographer to appropriately define concepts of terms to describe their invention in the best way.

The embodiments described in this specification and the configurations shown in the drawings are only some embodiments of the present invention and do not represent all of the aspects, features, and embodiments of the present invention. Accordingly, it should be understood that there may be various equivalents and modifications that can replace or modify the embodiments described herein at the time of filing this application.

It will be understood that if an element or layer is referred to as being "on," "connected to," or "coupled to" another element or layer, it may be directly on, connected, or coupled to the other element or layer or one or more intervening elements or layers may be present. When an element or layer is referred to as being "directly on," "directly connected to," or "directly coupled to" another element or layer, no intervening elements or layers are present. For example, if a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" if describing embodiments of the present invention relates to "one or more embodiments of the present invention." Expressions, such as "at least one of" and "any one of," if preceding a list of elements, modify the entire list of elements and do not modify the individual elements of the list. When phrases, such as "at least one of A, B and C, "at least one of A, B or C," "at least one selected from a group of A, B and C," or "at least one selected from among A, B and C," are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges is within the scope of this invention.

References to two compared elements, features, etc. as being "the same" may mean that they are "substantially the same." Thus, the phrase "substantially the same" may include a case having a deviation that is considered low in the art, for example, a deviation of about 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

The terminology used herein is for the purpose of describing embodiments of the present invention and is not intended to limit the present invention.

Conventionally, a monitoring system has a limited reception speed of a signal because the monitoring system consists of customized in-house board-based hardware and, thus, it is difficult to guarantee the consistency of measured values. Therefore, data correction is required to guarantee the consistency of measured values, a data analysis area needs to be synchronized, and overall remodeling must be undertaken to guarantee compatibility between hardware and software when the monitoring system is improved.

Conventionally, appropriateness is determined by applying a criterion for determination based on the statistical base of result values based on a measured value obtained by converting a measured analog signal into a digital signal. It is difficult for the accuracy of the criterion for determination to be guaranteed because the consistency of measured values cannot be guaranteed as described herein.

Accordingly, in the conventional system for monitoring resistance welding, the accuracy of the criterion for determination may not be reliable or it is difficult to ensure reliability, and an additional function implementation that is required in terms of technology advancement for the monitoring system is also limited.

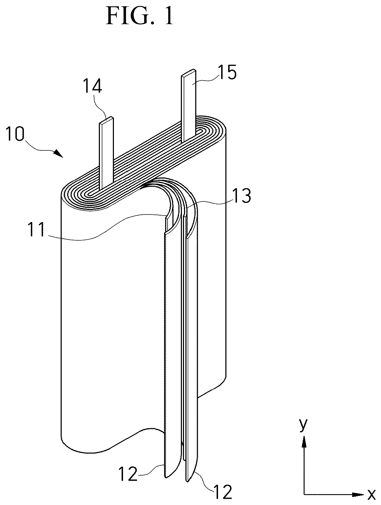

FIG. 1 schematically illustrates an electrode assembly built in a case of a secondary battery.

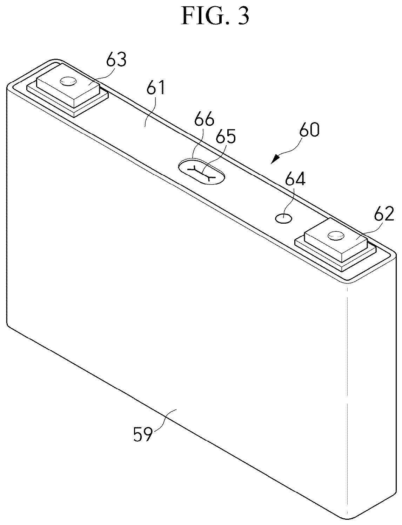

An electrode assembly 10 may be formed by winding or stacking a stack of a first electrode plate 11, a separator 12, and a second electrode plate 13, which are formed as thin plates or films. When the electrode assembly 10 is a wound stack, a winding axis may be parallel to the longitudinal direction (e.g., the y direction) of the case (see, e.g., the case 59 in FIG. 3). In other embodiments, the electrode assembly 10 may be a stack type rather than a winding type, but the shape of the electrode assembly 10 is not limited in the present invention. In addition, the electrode assembly 10 may be or may include a Z-stack electrode assembly in which a positive electrode plate and a negative electrode plate are inserted into both sides of a separator, which is then bent (or folded) into a Z-stack. In addition, one or more electrode assemblies may be stacked such that long sides of the electrode assemblies are adjacent to each other and accommodated together in the case, and the number of electrode assemblies in the case is not limited in the present invention. The first electrode plate 11 of the electrode assembly may act as a negative electrode, and the second electrode plate 13 may act as a positive electrode. However, the reverse is also possible.

The first electrode plate 11 may be formed by applying a first electrode active material, such as graphite or carbon, to a first electrode current collector formed of a metal foil, such as copper, a copper alloy, nickel, or a nickel alloy. The first electrode plate 11 may include a first electrode tab 14 (e.g., a first uncoated portion) that is or includes a region to which the first electrode active material is not applied. The first electrode tab 14 may be connected to an external first terminal. In some embodiments, when the first electrode plate 11 is manufactured, the first electrode tab 14 may be formed by being cut in advance to protrude to one side of the electrode assembly 10, or the first electrode tab 14 may protrude to one side of the electrode assembly 10 more than (e.g., farther than or beyond) the separator 12 without being separately cut.

The second electrode plate 13 may be formed by applying a second electrode active material, such as a transition metal oxide, on a second electrode current collector formed of or including a metal foil, such as aluminum or an aluminum alloy. The second electrode plate 13 may include a second electrode tab 15 (e.g., a second uncoated portion) that is or includes a region to which the second electrode active material is not applied. The second electrode tab 15 may be connected to an external second terminal. In some embodiments, the second electrode tab 15 may be formed by being cut in advance to protrude to the other side (e.g., the opposite side) of the electrode assembly 10 when the second electrode plate 13 is manufactured, or the second electrode plate 13 may protrude to the other side of the electrode assembly more than (e.g., farther than or beyond) the separator 12 without being separately cut.

In some embodiments, the first electrode tab 14 may be located on the left side of the electrode assembly 10, and the second electrode tab 15 may be located on the right side of the electrode assembly 10. In other embodiments, the first electrode tab 14 and the second electrode tab 15 may be located on one side (e.g., the same side) of the electrode assembly 10 in the same direction.

Here, for convenience of description, the left and right sides are defined according to the electrode assembly 10 as oriented in FIG. 1, and the positions thereof may change when the secondary battery is rotated left and right or up and down.

The separator 12 hinders or substantially prevents a short-circuit between the first electrode plate 11 and the second electrode plate 13 while allowing movement of lithium ions therebetween. The separator 12 may be made of or may include, for example, a polyethylene film, a polypropylene film, a polyethylene-polypropylene film, etc.

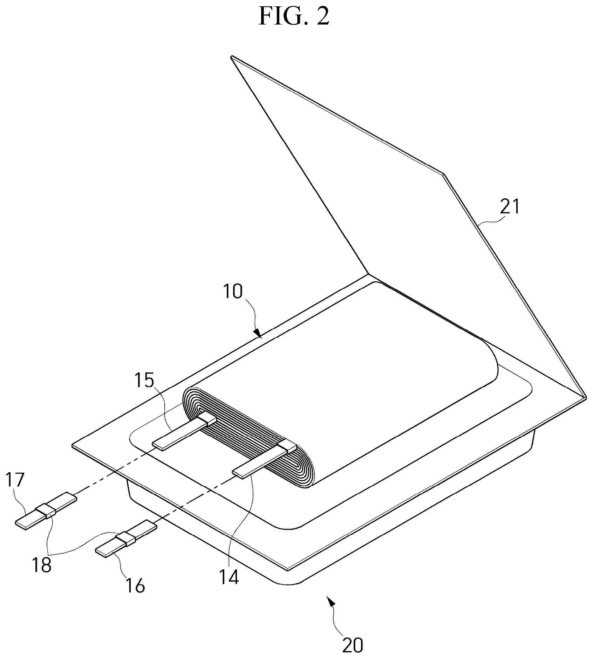

In some embodiments, the electrode assembly 10 may be accommodated in the case along with an electrolyte. In a pouch-type secondary battery, the electrode assembly 10 may be accommodated in a pouch made of or including flexible material in the form illustrated in FIG. 2. In a prismatic secondary battery, the electrode assembly 10 may be accommodated in a prismatic metal casing in the form illustrated in FIG. 3.

FIG. 2 schematically illustrates the pouch-type secondary battery.

The pouch-type secondary battery includes an electrode assembly 10 and a pouch 20 that accommodates or contains the electrode assembly 10 therein.

The electrode assembly 10 may be the same as the electrode assembly 10 illustrated in FIG. 1. The first electrode tab 14 and the second electrode tab 15 of the electrode assembly 10 may be electrically connected to respective external first and second terminal leads 16 and 17 by, for example, welding or other attaching method that preserves conductivity therebetween. At least a portion of each of the first terminal lead 16 and the second terminal lead 17 may be attached or covered with a tab film 18 for insulation from the pouch 20.

The pouch 20 may be sealed by having sealing parts 21 at the edges thereof come into contact with each other while accommodating or containing the electrode assembly 10 therein, in which case the sealing may be achieved with the tab film 18 interposed between the sealing parts 21. The sealing parts 21 of the pouch 20 may be made of or include a thermal fusion material that generally has weak adhesion to metal. Thus, the pouch 20 may be sealed (or fused) by interposing the tab film 18 between the sealing parts 21.

FIG. 3 illustrates a schematic external appearance configuration of a prismatic secondary battery.

A prismatic case 59 defines an overall appearance of the prismatic secondary battery and may be made of or include a conductive metal, such as aluminum, aluminum alloy, or nickel-plated steel. In addition, the case 59 may provide a space for accommodating or containing the electrode assembly 10 therein.

A cap assembly 60 may include a cap plate 61 that covers an opening in the case 59, and the case 59 and the cap plate 61 may be made of or include a conductive material. A first terminal 63 and a second terminal 62 may be electrically connected to the first electrode tab 14 and the second electrode tab 15 of the electrode assembly 10 illustrated in FIG. 1 inside the case 59 and may be installed to protrude outward through the cap plate 61.

The cap plate 61 may be equipped with or include an electrolyte injection port 64 configured to have a sealing plug installed therein and a vent 66 formed that includes a notch 65. The vent 66 is configured to discharge excess gas generated inside the secondary battery.

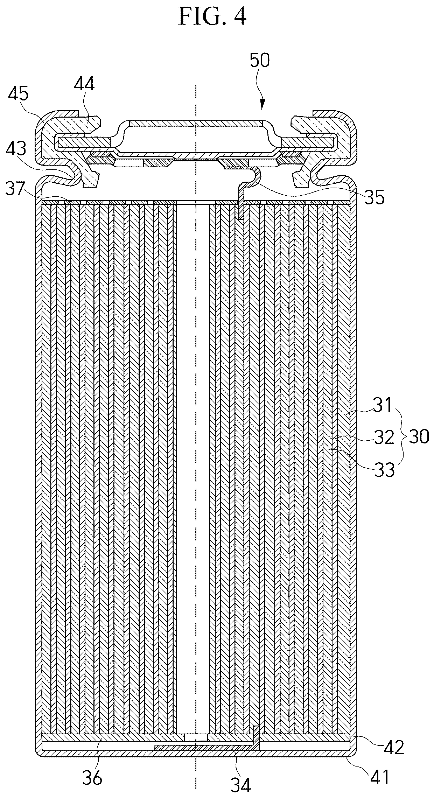

FIG. 4 is a cross-sectional view of a cylindrical secondary battery.

The cylindrical secondary battery includes an electrode assembly 30, a case (e.g., a can) accommodating the electrode assembly 30 and an electrolyte therein, a cap assembly 50 coupled to an opening in the case to seal the case, and an insulating plate 37 located between the electrode assembly 30 and the cap assembly 50 inside the case.

The electrode assembly 30 may include a separator 32 between a first electrode 33 and a second electrode 31, and the electrode assembly 30 may be wound in a jelly-roll form.

The first electrode 33 may include a first substrate and a first active material layer located on the first substrate. A first lead tab 35 may extend outwardly from a first uncoated portion of the first substrate where the first active material layer is not located and may be electrically connected to the cap assembly 50.

The second electrode 31 may include a second substrate and a second active material layer located on the second substrate. A second lead tab 34 may extend outwardly from a second uncoated portion of the second substrate where the second active material layer is not located and may be electrically connected to the case. The first lead tab 35 and the second lead tab 34 may extend in opposite directions with respect to each other.

The first electrode 33 may act as a positive electrode. In such an embodiment, the first substrate may be composed of or may include, for example, aluminum foil, and the first active material layer may include, for example, a transition metal oxide. The second electrode 31 may act as a negative electrode. In such an embodiment, the second substrate may be composed of or may include, for example, copper foil or nickel foil, and the second active material layer may include, for example, graphite.

The separator 32 may reduce or prevent a short-circuit between the first electrode 33 and the second electrode 31 while allowing movement of lithium ions therebetween. The separator 32 may be made of or may include, for example, at least one of a polyethylene film, a polypropylene film, a polyethylene-polypropylene film, etc.

The case accommodates or contains the electrode assembly 30 and the electrolyte and substantially forms the external appearance of the secondary battery together with the cap assembly 50. The case may have a substantially cylindrical body portion 42, and a bottom portion 41 connected to one side of the body portion 42. A beading part (e.g., a bead) 43 deformed inwardly may be formed in the body portion 42, and a crimping part (e.g., a crimped end) 45 bent inwardly may be formed at an open end of the body portion 42.

The beading part 43 may reduce or prevent movement of the electrode assembly 30 inside the case and may facilitate seating of a gasket 44 and the cap assembly 50. A crimping part 45 may firmly fix the cap assembly 50 by pressing the edge of the cap assembly 50 against the gasket 44. The case may be formed of or may include iron plated with nickel, for example.

The cap assembly 50 may be fixed to the inside of the crimping part 45 through the gasket 44 to seal the case. The cap assembly 50 may include a cap up, a safety vent, a cap down, an insulating member, and a subplate but is not limited to this example and may be variously modified.

The cap up may be located at the very top of the cap assembly 50. The cap up may include a terminal portion that protrudes convexly upwardly and is to be connected to an external circuit, and an outlet for discharging gas may be located around the terminal portion.

The safety vent may be located below the cap up. The safety vent may include a protrusion that protrudes convexly downwardly and is connected to the subplate with at least one notch located around the protrusion.

When excess gas is generated due to overcharging or abnormal operation of the secondary battery, the protrusion may be deformed upwardly by pressure and may separate from the subplate, while the safety vent may be cut (e.g., may tear or burst) along the notch. The cut safety vent may hinder or prevent the secondary battery from exploding by discharging gas to the outside.

The cap down may be located below the safety vent. The cap down may have a first opening for exposing the protrusion of the safety vent and a second opening for discharging gas. The insulating member may be located between the safety vent and the cap down to insulate the safety vent and the cap down.

The subplate may be located below the cap down. The subplate may be fixed to a lower surface of the cap down to block the first opening of the cap down, and the protrusion of the safety vent may be fixed to the subplate. The first lead tab 35 pulled out from the electrode assembly 30 may be fixed to the subplate. Accordingly, the cap up, the safety vent, the cap down, and the subplate may be electrically connected to the first electrode 33 of the electrode assembly 30.

The insulating plate 37 may be located below the beading part 43 to be in contact with the electrode assembly 30 and may have a tab opening for pulling out the first lead tab 35. The cap assembly 50, which is electrically connected to the first electrode 33 by the first lead tab 35, may face the electrode assembly 30 with the insulating plate 37 interposed therebetween and may maintain an insulated state from the electrode assembly 30 by the insulating plate 37. Another insulating plate 36 may be included for insulation between the electrode assembly 30 and the bottom portion 41 of the case.

Hereinafter, the background of the present invention will be described to aid understanding by those skilled in the art, followed by descriptions of embodiments of the present invention.

Thermal runaway refers to a phenomenon in which chemical reactions inside a cell proceed in a chain manner due to abnormal heat accumulation and a rapid temperature increase in a battery. In the case of medium- and large-sized prismatic batteries used in electric vehicles, hybrid vehicles, and large-scale energy storage systems, prevention of a thermal propagation phenomenon in which thermal runaway occurring in a specific cell spreads to adjacent cells in a module or pack has become a significantly important technical challenge. Thermal runaway is primarily caused by external impacts, overcharging, internal short circuits, manufacturing defects, or the like, and heat generation may be accelerated by decomposition of an electrolyte, oxidation reactions of a positive electrode active material, or the like. Due to the characteristics of batteries for vehicles, if thermal runaway propagates to adjacent cells, there may be a risk that thermal runaway spreads throughout the entire module or pack, which may cause safety issues due to fire. In addition, introduction of excessive protection structures to prevent thermal runaway may lead to a reduction in energy density.

To verify thermal runaway prevention technologies for medium- and large-sized prismatic batteries, various evaluation methods have been proposed on a cell, module, and pack basis. One method has been proposed in which an internal short circuit is artificially induced by penetrating a battery cell from the outside by using a metal nail. Upon penetration, the nail comes into direct contact with internal electrodes, thereby causing an electrical short circuit and inducing a rapid temperature increase. Through the aforementioned method, it is possible to evaluate the sensitivity of the internal structure of the battery cell to mechanical damage and to measure the influence of physical impact on thermal runaway of the battery. Furthermore, another method has been proposed in which a heater (e.g., a heating pad) is attached to an outer surface of a battery cell to heat a specific portion of the battery cell, thereby inducing an internal short circuit due to damage to a battery separator when a certain temperature is reached.

However, the external physical impact test (also known as the nail penetration test) from among the aforementioned methods refers to a method in which an internal short circuit is induced by physically damaging a metal housing (e.g., a can) of a battery cell, resulting in direct short-circuiting due to penetration, and distortion of the internal structure, thereby causing changes in normal internal resistance and electrical flow patterns, which leads to a problem in that physical damage arises. In addition, while actual thermal runaway involves uniform heat generation in the cell due to internal chemical reactions, the nail penetration method generates intense heat only at a specific point, thereby being limited in that it is difficult to accurately simulate the actual thermal propagation phenomenon. Furthermore, due to the physical damage, heat tends to concentrate in one direction, causing asymmetric results.

In the external heater heating method, even when a thermal insulation structure is provided, it is difficult to completely block a temperature increase in a cell, resulting in a limitation in accurately simulating an actual thermal propagation situation. In other words, even when thermal insulation is applied to an adjacent cell, it is difficult to achieve complete thermal blocking, and heat transfer to the adjacent cell may occur. In addition, because the heater method raises the temperature gradually from the outside, there is a problem in that it is difficult to fully simulate a rapid runaway phenomenon.

A method has been proposed in which a heater is inserted into a cell and thermal runaway is induced through heating by using the heater. However, because a cell manufacturing process requires inserting a film-type heater into the cell, followed by electrolyte injection and a formation process, there is a problem in that there is a high risk of ignition during formation and difficulty in securing qualified cells.

Embodiments of the present invention provide a system and method for thermal propagation evaluation, which may induce thermal runaway without physical damage to a can and without additional heat transfer to adjacent cells.

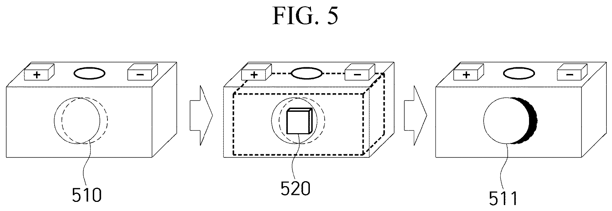

FIG. 5 illustrates a system for thermal propagation evaluation according to embodiments of the present invention.

A hole 510 may be formed in a long side of a can of a battery. A heater 520 may be attached to a cell through the hole 510. The heater 520 may be configured in the form of a film and may be attached to an outer surface of a stack in the cell. The hole 510 may be formed in various shapes, such as a circular shape or a rectangular shape, and an area of the hole 510 may be formed to be larger than that of the heater 520.

A cut portion 511 of the can, which is removed during a hole-machining process, may be placed back into an original space where the cut portion 511 was present before the removal, and sealing is performed using a special adhesive or by a thermal treatment method.

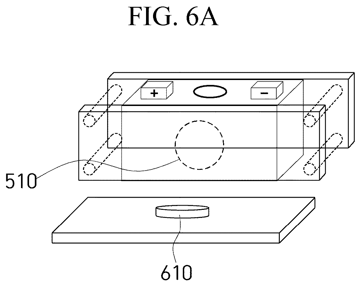

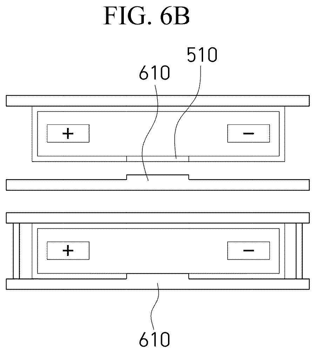

FIGS. 6A and 6B illustrate a jig structure of the thermal propagation evaluation system according to embodiments of the present invention.

FIG. 6A illustrates a battery mounted on a jig, and FIG. 6B illustrates a state in which a protruding structure 610 of the jig is coupled to the battery to correspond to the hole (or hole region) 510 machined in the long side of the can, thereby performing the hole sealing.

A rectangular plate-shaped jig may have a cylindrical protruding structure 610 configured to enable sealing of the hole region 510. A height of the cylindrical protruding structure 610 may be designed to be identical to or less than a height of the hole region 510.

As described above, when the hole region (510) is formed in a rectangular shape, the protruding structure 610 of the jig may be formed in a rectangular parallelepiped shape, and a height of the rectangular parallelepiped protruding structure 610 may be designed to be identical to or less than a height of the hole region 510.

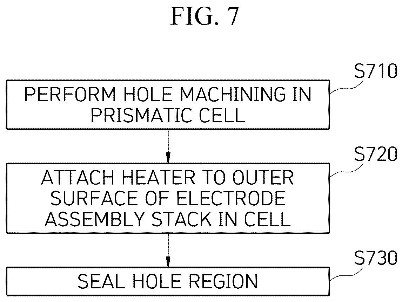

FIG. 7 is a flowchart describing a method for thermal propagation evaluation according to embodiments of the present invention.

The thermal propagation evaluation method according to embodiments of the present invention may include step S710 of machining a hole in a long side of a prismatic cell, step S720 of attaching a heater to an outer surface of a stack in the cell, and step S730 of performing sealing on the hole region (510).

In step S710, a circular hole may be machined in the long side of the prismatic cell in which no heater is installed. The hole may be formed in the long side of the can of a secondary battery by using laser cutting, computer numerical control (CNC) drilling, or the like.

In step S720, a heater may be attached to a preset region of the outer surface of the stack formed by stacking positive and negative electrode plates in the cell. The heater may be attached in the form of a film, and may be connected to an external power supply through a wire to perform heating of the specific cell.

In step S730, a cut portion, which is removed during a hole-machining process, may be placed back into an original space where the cut portion has been present before the removal, and sealing may be performed using a special adhesive or by a thermal treatment method.

According to embodiments of the present invention, in step S730, a jig for safety evaluation may be coupled to the hole region to seal the hole and maintain airtightness inside the can. One surface of the jig may include a cylindrical body corresponding to the size and shape of the hole, and a sealing material, such as silicone or polytetrafluoroethylene (PTFE, also known as Teflon^{®}) may be applied to the cylindrical body to ensure complete sealing. A temperature or pressure sensor may be installed in the jig so that the jig may be designed to allow real-time data collection during evaluation and enable monitoring of internal pressure increase in the event of battery thermal runaway.

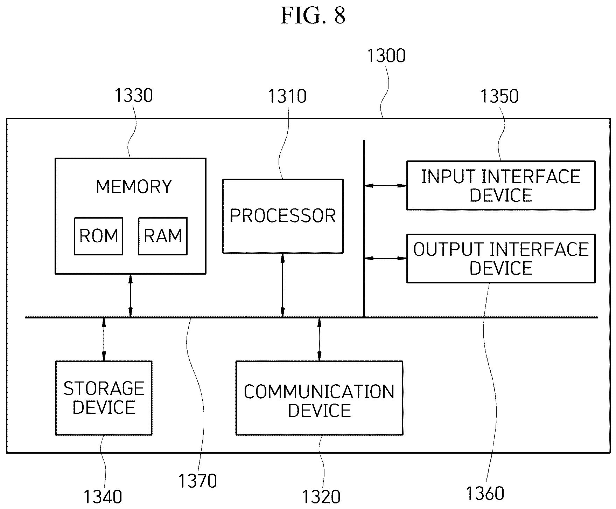

FIG. 8 is a block diagram describing a computer system for implementing the method according to embodiments of the present invention.

Referring to FIG. 8, a computer system 1300 may include at least one of a processor 1310, a memory 1330, an input interface device 1350, an output interface device 1360, and a storage device 1340, which communicate with each other via a bus 1370. The computer system 1300 may further include a communication device 1320 coupled to a network. The processor 1310 may be a central processing unit (CPU) or a semiconductor device that is configured to execute instructions stored in the memory 1330 or the storage device 1340. The memory 1330 and the storage device 1340 may include various types of volatile or non-volatile storage media. For example, the memory may include a read-only memory (ROM) and a random access memory (RAM). In embodiments described herein, the memory may be located inside or outside the processor, and the memory may be connected to the processor through various known configurations. The memory may be various types of volatile or non-volatile storage media, and for example, the memory may include a read-only memory (ROM) or a random access memory (RAM).

The thermal propagation evaluation system, according to embodiments of the present invention, may include a memory 1330 configured to store a control program for simulating a thermal runaway phenomenon of a battery cell and a processor 1310 configured to execute the program. The processor 1310 may execute an algorithm to apply heat to the battery cell by using the heater attached to the hole, thereby inducing thermal runaway.

The processor 1310 transmits a command to perform sealing on the region in which the hole is formed and performs sealing by using a jig according to the command. The jig includes a protruding structure corresponding to a size and shape of the region in which the hole is formed, and a height of the protruding structure is designed to be identical to or less than a height of the region in which the hole is formed.

An embodiment of the present invention may be implemented as a computer-implemented method or as a non-transitory computer-readable medium in which computer-executable instructions are stored. In one embodiment, when executed by a processor, the computer-readable instructions may perform a method according to at least one aspect described herein.

The communication device 1320 may transmit or receive wired signals or wireless signals.

In addition, the method according to an embodiment of the present invention may be implemented in the form of program instructions executable through various computer means and may be recorded on a computer-readable medium.

The computer-readable medium may include program instructions, data files, data structures, or combinations thereof. The program instructions recorded on the computer-readable medium may be specially designed and configured for the embodiments of the present invention or may be those that are well known and commonly used by those skilled in the computer software field. The computer-readable recording medium may include hardware devices configured to store and execute program instructions. For example, the computer-readable recording medium may include magnetic media, such as hard disks, floppy disks, and magnetic tapes; optical recording media, such as CD-ROMs and DVDs; magnetooptical media, such as floptical disks; and ROM, RAM, flash memory, and the like. The program instructions may include not only machine code such as that generated by a compiler but also high-level language code that can be executed by a computer through an interpreter or the like.

Hereinafter, any material that may be usable for the secondary battery according to examples of the present invention will be described.

As the positive electrode active material, a compound capable of reversibly intercalating/deintercalating lithium (e.g., a lithiated intercalation compound) may be used. For example, at least one of a composite oxide of lithium and a metal such as at least one of cobalt, manganese, nickel, and combinations thereof may be used.

The composite oxide may be or include a lithium transition metal composite oxide, and examples thereof may include at least one of a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by at least any one of the following formulas may be used: LiaA1-bXbO2-cDc (0.90≤a≤1.8, 0≤b≤0.5, 0≤c≤0.05); LiaMn2-bXbO4-cDc (0.90≤a≤1.8, 0≤b≤0.5, 0≤c≤0.05); LiaNi1-b-cCobXcO2-αDα (0.90≤a≤1.8, 0≤b≤0.5, 0≤c≤0.5, 0<α<2); LiaNi1-b-cMnbXcO2-αDα (0.90≤a≤1.8, 0≤b≤0.5,0≤c≤0.5, 0<α<2); LiaNibCocL1dGeO2 (0.90≤a≤1.8, 0≤b≤0.9, 0≤c≤0.5, 0≤d≤0.5, 0≤e≤0.1); LiaNiGbO2 (0.90≤a≤1.8, 0.001≤b≤0.1); LiaCoGbO2 (0.90≤a≤1.8, 0.001≤b≤0.1); LiaMn1-bGbO2 (0.90≤a≤1.8, 0.001≤b≤0.1); LiaMn2GbO4 (0.90≤a≤1.8, 0.001≤b≤0.1); LiaMn1-gGgPO4 (0.90≤a≤1.8, 0≤g≤0.5); Li(3-f)Fe2(PO4)3 (0≤f≤2); and LiaFePO4 (0.90≤a≤1.8).

In the herein formulas: A is or includes at least Ni, Co, Mn, or a combination thereof; X is or includes at least Al, Ni, Co, Mn, Cr, Fe, Mg, Sr, V, a rare earth element, or a combination thereof; D is or includes at least O, F, S, P, or a combination thereof; G is or includes at least Al, Cr, Mn, Fe, Mg, La, Ce, Sr, V, or a combination thereof; and L1 is or includes at least Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be or include aluminum (Al) but is not limited thereto.

The negative electrode active material may include a material capable of reversibly intercalating/deintercalating at least one of lithium ions, lithium metal, an alloy of lithium metal, a material capable of being doped and undoped with lithium, or a transition metal oxide.

The material capable of reversibly intercalating/deintercalating lithium ions may be or include a carbon-based negative electrode active material, which may include, for example, at least crystalline carbon, amorphous carbon, or a combination thereof. Examples of the crystalline carbon may include graphite, such as natural graphite or artificial graphite, and examples of the amorphous carbon may include at least one of soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be or include at least silicon, a silicon-carbon composite, SiOx (0 < x < 2), a Si-based alloy, or a combination thereof.

The silicon-carbon composite may be or include a composite of silicon and amorphous carbon. According to one example embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, at least one of copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent may constitute a medium through which ions involved in the electrochemical reaction of the battery can move.

The non-aqueous organic solvent may be or include at least a carbonate-based, an ester-based, an ether-based, a ketone-based, an alcohol-based solvent, an aprotic solvent, and may be used alone or in combination of two or more.

Depending on the type of lithium secondary battery, a separator may be present between the first electrode plate (e.g., the negative electrode) and the second electrode plate (e.g., the positive electrode). As the separator, at least polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles such as at least one of Al2O3, SiO2, TiO2, SnO2, CeO2, MgO, NiO, CaO, GaO, ZnO, ZrO2, Y2O3, SrTiO3, BaTiO3, Mg(OH)2, boehmite, and combinations thereof but is not limited thereto.

The organic material and the inorganic material may be mixed in one coating layer or may be in the form of a coating layer containing an organic material and a coating layer containing an inorganic material that are laminated on each other.

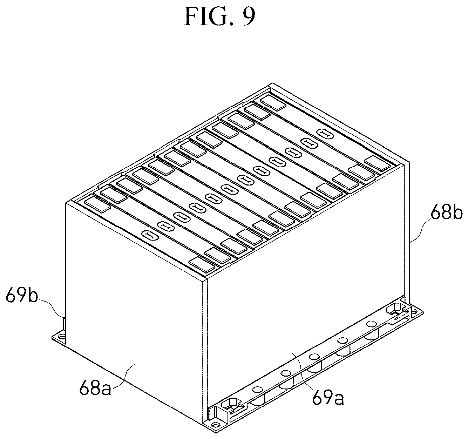

FIG. 9 is an illustration of a secondary battery module in which secondary batteries manufactured according to examples of the present invention are arranged. With the increase in secondary battery capacity for driving electric vehicles and the like, a secondary battery module may be manufactured by arranging and connecting a plurality of secondary battery cells transversely and/or longitudinally. The plurality of secondary batteries may be arranged in a space defined by a pair of facing end plates 68a and 68b and a pair of facing side plates 69a and 69b. The secondary batteries may be designed appropriately in arrangement (e.g., an arrangement direction) and number to obtain desired voltage and current specifications.

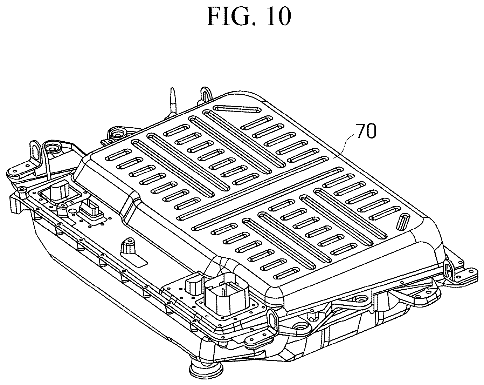

FIG. 10 is an illustration schematically showing the configuration of a battery pack 70 according to embodiments of the present invention. Referring to FIG. 10, a battery pack 70 may include an assembly to which individual batteries are electrically connected, and a pack housing accommodating the same. In the drawings, for convenience of illustration, components including a bus bar, a cooling unit, external terminals for electrically connecting batteries, etc., are not shown.

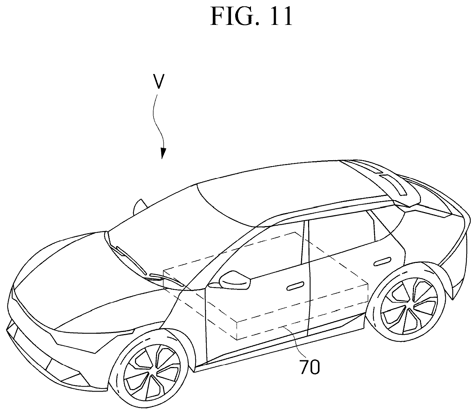

The battery pack 70 may be mounted on (or in) a vehicle. The vehicle may be, for example, an electric vehicle, a hybrid vehicle, a plug-in hybrid vehicle, and the like. The vehicle may be a four-wheeled vehicle or a two-wheeled vehicle but is not limited thereto. FIG. 11 shows a vehicle V that includes the battery pack 70 shown in FIG. 10 on the lower body thereof. The vehicle V may operate by (e.g., may be powered by) receiving power from the battery pack 70.

Although the present invention has been described above with reference to certain embodiments and drawings, the present invention is not limited thereto, and various modifications and variations are possible by those skilled in the art to which the present invention pertains within the spirit of the present invention and the scope of equivalents of the claims set forth below.

## Claims

1. A method for thermal propagation evaluation performed by a thermal propagation evaluation system, the method comprising:
machining a hole (510) in a long side of a battery can (59);
attaching a heater (520) inside the battery can (59) through the hole (510); and
sealing the region in which the hole (510) is formed.

2. The method according to claim 1, wherein the machining of the hole (510) in the long side of the battery can (59) comprises machining a hole having a preset shape in a long side of a prismatic battery for vehicles.

3. The method according to claims 1 or 2, wherein the attaching of the heater (520) comprises attaching a film-type heater to an outer surface of an electrode stack (10) in a cell.

4. The method according to any of the preceding claims, wherein the sealing comprises placing a cut portion (511), which is removed in the machining of the hole (510), in an original space where the cut portion (511) was present before being removed, and sealing using an adhesive or a thermal treatment.

5. The method according to any of the preceding claims, wherein the sealing comprises using a jig for safety evaluation.

6. The method according to claim 5, wherein the jig comprises a protruding structure (610) corresponding to a size and shape of the region in which the hole (510) is formed.

7. The method according to claims 5 or 6, wherein a height of the protruding structure (610) is the same as or less than a height of the region in which the hole (510) is formed.

8. The method according to any of claims 5 to 7, wherein at least one sensor of a temperature sensor or a pressure sensor is disposed in the protruding structure (610).

9. A system for thermal propagation evaluation, the system comprising:
a memory (1330) configured to store a control program for simulating a thermal runaway phenomenon of a battery cell; and
a processor (1310) configured to execute the program, the processor being configured to transmit a control command for performing an algorithm that applies heat to the battery cell by using a heater (520) attached to a hole (510) formed in a battery can (59) and induces thermal runaway.

10. The system according to claim 9, wherein the processor (1310) is configured to transmit a command to seal the region in which the hole (510) is formed by using a jig according to the command, and
wherein the jig comprises a protruding structure (610) corresponding to a size and shape of the region in which the hole (510) is formed, and a height of the protruding structure (610) is the same as or less than a height of the region in which the hole (510) is formed.

11. A system for thermal propagation evaluation, the system comprising:
a heater (520) inserted into and attached inside a battery can (59) through a hole region (510) formed in the battery can (59); and
a sealing component sealing the hole region (510).

12. The system according to claim 11, wherein the heater (520) is attached in a form of a film to a preset region of an outer surface region of an electrode stack (10) in a cell through the hole region (510) formed in a long side of the battery can (59).

13. The system according to claims 11 or 12, wherein the sealing component comprises a protruding structure (610) disposed on one surface of a jig for safety evaluation, and
wherein the protruding structure (610) is formed to correspond to a size and shape of the hole region (510), and a height of the protruding structure (610) is formed to be the same as or less than a height of the hole region (510).
